# EUROPEAN PATENT APPLICATION

(11) **EP 1 734 605 A1**
(43) Date of publication of application: **20.12.2006**
(21) Application number: 05720454.7
(22) Date of filing: 10.03.2005
(51) Int. Cl.: H01M 8/04, H01M 8/12

(54) **SOLID ELECTROLYTE TYPE FUEL CELL**

(30) Priority: 31.03.2004 JP 2004106588
(71) Applicant: DAIKIN INDUSTRIES, LTD., Osaka-shi, Osaka 530-8323 (JP)
(72) Inventor: KAWAZOE, Masanobu, c/o Sakai Seisakusho, Sakai-shi, Osaka 5918511 (JP); MATSUI, Nobuki, c/o Sakai Seisakusho, Sakai-shi, Osaka 5918511 (JP); YONEMOTO, Kazuo, c/o Sakai Seisakusho, Sakai-shi, Osaka 5918511 (JP)
(74) Representative: Goddar, Heinz J.
(86) International application number: PCT/JP2005/004183
(87) International publication number: WO 2005/099014

(57) **Abstract**

To properly control a flow rate of fluid through a flow path for heat recovery to the overall flow rate, a branch flow rate regulating part 12 is provided that branches air between an air supply source 9 and a heat exchanger 10 to lead the branched air to a heat recovery path 11, and regulates the amount of branched air.

## Description

### Technical Field

The present invention relates to a solid electrolyte type fuel cell that houses a solid electrolyte type fuel cell stack in a housing container.

### Background Art

Conventionally, fuel cells provided with a heat recovery path around a cell module to recover heat loss from the cell module have been proposed, the cell module including a cell stack that generates electricity from a fuel gas and an oxygen-containing gas, and a burning section that contacts and burns the remaining fuel gas and oxygen-containing gas from the cell stack (see a patent document 1, and a patent document 2).

In a solid electrolyte type fuel cell described in the patent document 1, a fluid flow path is formed between a high-temperature heat insulating material and a low-temperature heat insulating material that surround a fuel cell stack and through this fluid flow path, air is supplied to an air inlet of the fuel cell stack while fuel from a fuel supply source is supplied to a fuel inlet of the fuel cell stack after being preheated by a preheater.

In a fuel cell described in the patent document 2, a cell stack including a plurality of cells of fuel cell is housed inside a housing container that has a pipe between a frame body and a heat insulating material, and a fuel gas is supplied through a fuel gas supply pipe while an oxygen-containing gas is supplied through an oxygen-containing gas pipe and the said pipe.
Patent Document 1: Japanese Patent Application Laid-Open No. 2003-151610
Patent Document 2: Japanese Patent Application Laid-Open No. 2003-249256

### Disclosure of the Invention

### Problems to be Solved by the Invention

Solid electrolyte type fuel cells, which operate at high temperatures from about 700°C to 1000°C, need to have a cell module including a cell stack covered with a thick heat insulating material in order to properly maintain the temperature of the cell stack that generates electricity, generate electricity with high efficiency while preventing heat loss, and further keep the outer surface not more than an allowable temperature. This hinders the cell module including its surrounding heat insulating layer from becoming compact.

A technique is also known of providing a heat insulating layer around a cell module with an air path, and recovering heat loss from the cell module with air flowing through the air path, for improving efficiency of the cell module (see the patent document 1, and the patent document 2). In the structures of the patent document 1 and patent document 2 where all air to be supplied to the cell stack flows through the air path, however, it is necessary to increase the cross-sectional area of the air flow path in order to supply air with low power, and further to increase the thickness of the heat insulating layer between the air flow path for heat recovery and the cell module to some degree because the cell module might be cooled too much due to an excessive air flow rate, resulting in an increase in thickness of the heat insulating layer including the air path for heat recovery as well.

Further, during partial-load operation, a reduction in the amount of power generation involves a reduction in the amount of supplied air, which leads to a reduction in air flow rate through the air path for heat recovery. Nevertheless, the amount of heat loss increases relatively to the amount of power generation and the supplied flow rate because the cell stack temperature during partial-load operation needs to be maintained the same as during rated operation. Accordingly, in order to perform proper heat recovery and maintain the cell module at a proper temperature during partial-load operation, it is necessary to increase the ratio of an air flow rate through the air flow path for heat recovery to the overall flow rate relatively to that during rated operation. The same holds true for standby operation (hot standby) that maintains the cell stack temperature with generation of a little amount of electricity or burning. However, an air flow rate through the air flow path for heat recovery cannot be changed to the overall flow rate in response to such demand.

The present invention has been made in view of the above-mentioned problems, and has an object to provide a solid electrolyte type fuel cell capable of properly controlling a flow rate of fluid flowing through a flow path for heat recovery to the overall flow rate.

### Means for Solving the Problems

A solid electrolyte type fuel cell according to the present invention includes a heat recovery path that recovers heat loss from a cell module around the cell module including a cell stack that generates electricity from a fuel gas and an oxygen-containing gas, and a burning section that contacts and bums remaining fuel gas and oxygen-containing gas from the cell stack, and includes branch flow rate regulating means that branches supplied fluid to the cell stack, the supplied fluid being one of a fuel gas and an oxygen-containing gas, and regulates a flow rate of the supplied fluid to be branched, and a branch flow path that supplies the supplied fluid having been branched and whose flow rate has been regulated to the heat recovery path.

Thus the flow rate of the supplied fluid to be supplied to the heat recovery path can be rendered less than the overall flow rate. Consequently, the heat recovery path can be reduced in thickness, and the heat insulating layer can be reduced in thickness as well, thereby attaining significant miniaturization as a whole. Further, the regulation of the branch flow rate allows proper heat recovery to be conducted during partial-load operation or during standby operation, thereby attaining a favorable high-efficiency operation.

In this case, the branch flow rate regulating means preferably increases a ratio of the flow rate of the supplied fluid to be branched to the overall flow rate, in response to partial-load operation or standby operation being conducted by the solid electrolyte type fuel cell.

In addition, the heat recovery path is preferably formed across a plurality of layers with reference to the cell module.

Also, the heat recovery path may further surround a heat exchanger that exchanges heat with burned waste gas. The cell module may further house a heat exchanger that exchanges heat with burned waste gas.

Moreover, the heat recovery path may further surround a vaporizer that vaporizes the fuel gas added with water. The cell module may further house a vaporizer that vaporizes the fuel gas added with water.

A solid electrolyte type fuel cell according to another invention includes a solid electrolyte type fuel cell including a heat recovery path that recovers heat loss from a cell module around the cell module including a cell stack that generates electricity from a fuel gas and an oxygen-containing gas, and a burning section that contacts and bums remaining fuel gas and oxygen-containing gas from the cell stack, and includes a first flow path that leads the oxygen-containing gas to the cell stack, and a second flow path that leads the oxygen-containing gas to the heat recovery path.

Thus the flow rate of the oxygen-containing gas to be supplied to the heat recovery path can be rendered less than the overall flow rate. Consequently, the heat recovery path can be reduced in thickness, and the heat insulating layer can be reduced in thickness as well, thereby attaining significant miniaturization as a whole. Further, the independent regulation of the flow rate of the oxygen-containing gas allows proper heat recovery to be conducted during partial-load operation or during standby operation, thereby attaining a favorable high-efficiency operation.

### Effect of Invention

The present invention has the specific effect of attaining significant miniaturization of a solid electrolyte type fuel cell as a whole, and further attaining a favorable high-efficiency operation irrespective of an operation state.

### Brief Description of Drawings

Fig. 1 is a schematic view illustrating a preferred embodiment of a solid electrolyte type fuel cell according to the present invention.
Fig. 2 is a schematic perspective view, partly broken away, illustrating an example of the structure of a heat recovery path.
Fig. 3 is a transversal-sectional view illustrating an example of the structure of the heat recovery path.
Fig. 4 is a transversal-sectional view illustrating another example of the structure of the heat recovery path.
Fig. 5 is a transversal-sectional view illustrating yet another example of the structure of the heat recovery path.
Fig. 6 is a schematic view illustrating another preferred embodiment of the solid electrolyte type fuel cell according to the present invention.
Fig. 7 is a schematic view illustrating yet another preferred embodiment of the solid electrolyte type fuel cell according to the present invention.
Fig. 8 is a schematic view illustrating a further preferred embodiment of the solid electrolyte type fuel cell according to the present invention.
Fig. 9 is a schematic view illustrating a further preferred embodiment of the solid electrolyte type fuel cell according to the present invention.
Fig. 10 is a schematic view illustrating another preferred embodiment of the solid electrolyte type fuel cell according to the present invention.

### Explanation of Referenced Numerals

- 1: fuel cell stack 3 heat insulating material
- 10: heat exchanger
- 11: heat recovery path
- 12: branch flow rate regulating part

### Best Modes for Carrying Out the Invention

Preferred embodiments of a solid electrolyte type fuel cell according to the present invention will be described in detail on referring to the attached drawings.

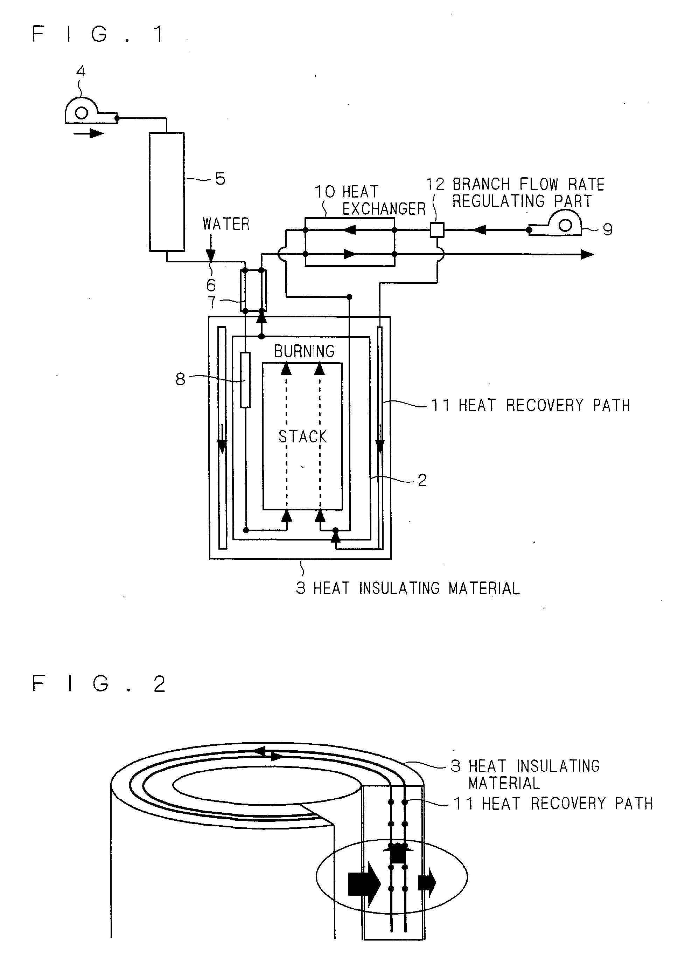

Fig. 1 is a schematic view illustrating a preferred embodiment of the solid electrolyte type fuel cell according to the present invention.

This solid electrolyte type fuel cell includes a fuel cell stack 1, a housing container 2 that houses the fuel cell stack 1, a heat insulating material 3 that surrounds the housing container 2, a fuel gas supply source 4, a desulfurizer 5 that receives a fuel gas and conducts a desulfurization process, a water adding part 6 that adds water to the output (desulfurized fuel gas) from the desulfurizer 5, a vaporizer 7 that exchanges heat with burned gas from the fuel cell stack 1 and vaporizes the desulfurized fuel gas added with water, a reformer 8 that reforms the vaporized, water-added desulfurized fuel gas and supplies it to the fuel cell stack 1, an air supply source 9, a heat exchanger 10 that exchanges heat with gas output from the vaporizer 7 to raise the temperature of air from the air supply source 9, and supplies it to the fuel cell stack 1 through the high-temperature container 2, a heat recovery path 11 formed in the heat insulating material 3 and connected to an air supply part of the fuel cell stack 1, and a branch flow rate regulating part 12 that branches air between the air supply source 9 and the heat exchanger 10 to lead the branched air to the heat recovery path 11, and regulates the amount of branched air.

A mechanism of supporting of the fuel cell stack 1 is conventionally known, and is therefore not illustrated.

That a solid electrolyte type fuel cell having the above structure is supplied with a fuel gas and air, and bums the fuel gas, and keeps burning the fuel gas while maintaining operating temperatures from about 700°C to 1000°C by recovering waste heat is conventionally known, and is therefore not described here in detail.

In this preferred embodiment, the amount of air through the heat recovery path 11 provided in the heat insulating material 3 is rendered less than the overall amount required for generation of electricity. Consequently, the heat recovery path 11 can be reduced in thickness to have a reduced cross-sectional area, and further the thickness of the heat insulating layer can be significantly reduced, thereby attaining significant miniaturization as a whole.

Moreover, a flow rate of branched air can be regulated by the branch flow rate regulating part 12, so a flow rate of branched air can be properly set depending on an operation state such as during rated operation, during partial-load operation, and during standby operation, thereby attaining a favorable high-efficiency operation irrespective of the operation state.

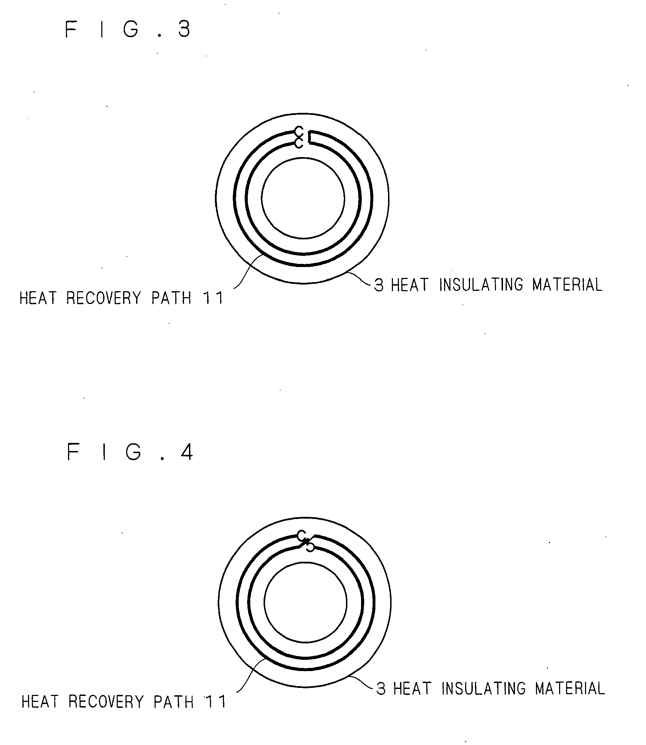

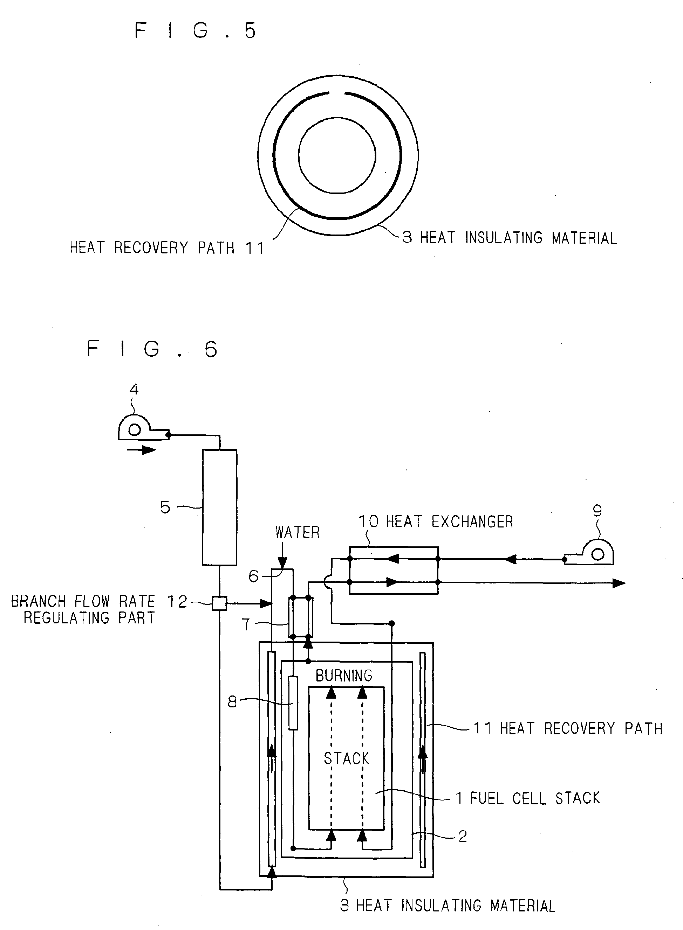

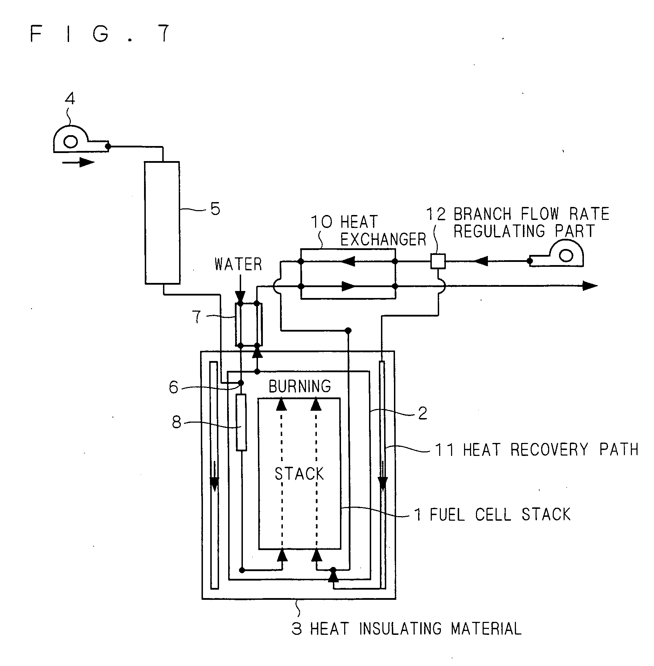

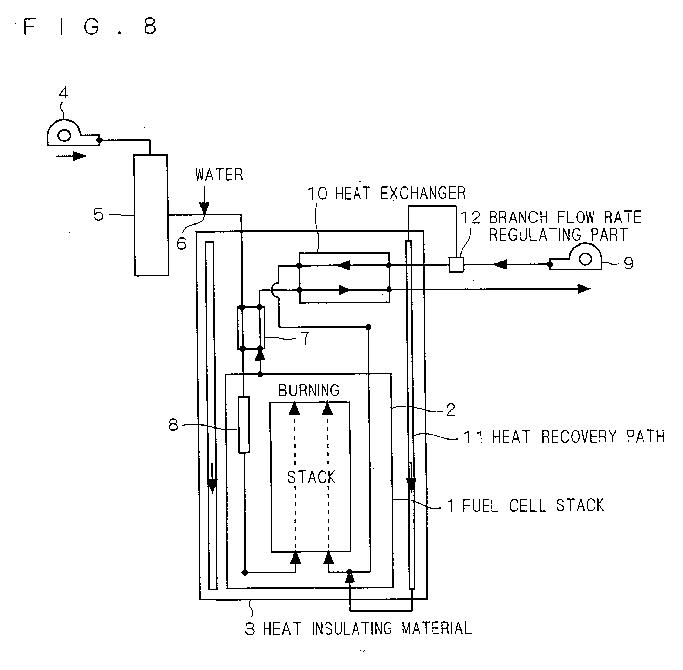

While the heat recovery path 11 extends in a vertical direction in the plane of the drawing (a direction parallel to the central axis of the heat insulating material 3 of cylindrical shape, for example) in Fig. 1, it may extend in a ring shape (a ring-shape with the central axis of the heat insulating material 3 of cylindrical shape as a center, for example), as shown in Fig. 2. In such case, the heat recovery path 11 may be folded concentrically in the same plane as shown in Fig. 3, or may have a shape that is concentric in the same plane and connected in series to lead air in the same direction as shown in Fig. 4, or may have a shape of a single ring in the same plane as shown in Fig. 5. In any of the cases shown in Figs. 3 to 5, connection by a desirable connection path is established with the heat recovery path 11 in a different plane shown in Fig. 2.

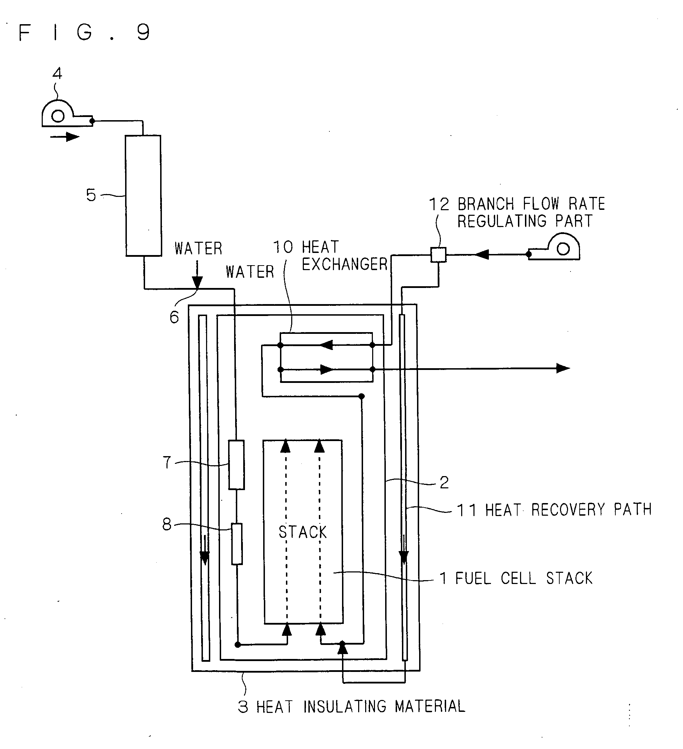

Fig. 6 is a schematic view illustrating another preferred embodiment of the solid electrolyte type fuel cell according to the present invention.

The only difference of this solid electrolyte type fuel cell from the solid electrolyte type fuel cell in Fig. 1 is that the branch flow rate regulating part 12 is provided between the desulfurizer 5 and the water adding part 6, rather than between the air supply source 9 and the heat exchanger 10.

In this preferred embodiment, waste heat can be recovered by leading the desulfurized fuel gas to the heat recovery path 11, thus attaining the same effects as the preferred embodiment shown in Fig. 1 where waste heat is recovered by air.

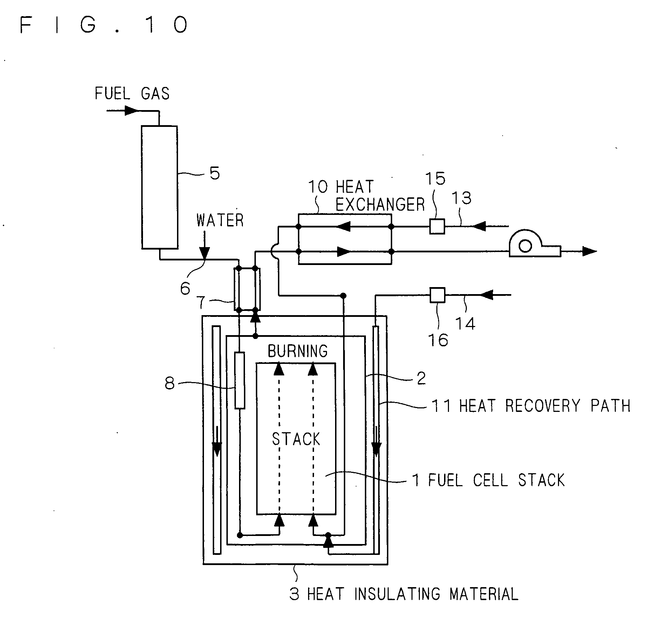

Fig. 7 is a schematic view illustrating yet another preferred embodiment of the solid electrolyte type fuel cell according to the present invention.

The only difference of this solid electrolyte type fuel cell from the solid electrolyte type fuel cell in Fig. 1 is that water is added to the desulfurized fuel gas after being vaporized by the vaporizer 7.

In this preferred embodiment, although water is vaporized and then added to the desulfurized fuel gas, the water-added desulfurized fuel gas can be supplied to the fuel cell 1 ultimately in the same state as the preferred embodiment shown in Fig. 1, thus attaining the same effects as the preferred embodiment shown in Fig. 1.

Fig. 8 is a schematic view illustrating a further preferred embodiment of the solid electrolyte type fuel cell according to the present invention.

The only difference of this solid electrolyte type fuel cell from the solid electrolyte type fuel cell in Fig. 1 is that the heat insulating material 3 is formed to further surround the vaporizer 7 and the heat exchanger 10 independently, and that the heat recovery heat 11 is formed to further surround the vaporizer 7 and the heat exchanger 10.

In this preferred embodiment, heat recovery efficiency can be further improved, and the same effects as the preferred embodiment shown in Fig. 1 can be attained. It is to be noted that the preferred embodiments shown in Figs. 6 and 7 can be modified in the similar fashion as the preferred embodiment shown in Fig. 8.

Fig. 9 is a schematic view illustrating a further preferred embodiment of the solid electrolyte type fuel cell according to the present invention.

The only difference of this solid electrolyte type fuel cell from the solid electrolyte type fuel cell in Fig. 1 is that the vaporizer 7 and the heat exchanger 10 are further housed in space that houses the fuel cell stack 1.

Again in this preferred embodiment, heat recovery efficiency can be further improved, and the same effects as the preferred embodiment shown in Fig. 1 can be attained. It is to be noted that the preferred embodiments shown in Figs. 6 and 7 can be modified in the similar fashion as the preferred embodiment shown in Fig. 9.

Fig. 10 is a schematic view illustrating another preferred embodiment of the solid electrolyte type fuel cell according to the present invention.

The only difference of this solid electrolyte type fuel cell from the solid electrolyte type fuel cell in Fig. 1 is that the branch flow rate regulating part 12 is replaced by a first flow path 13 that leads air to the heat exchanger 10 and a second flow path 14 that leads air to the heat recovery path 11, and that the flow paths 13 and 14 are provided with flow rate regulating parts 15 and 16, respectively.

In this preferred embodiment, the amount of air through the heat recovery path 11 provided in the heat insulating material 3 is rendered less than the overall amount required for generation of electricity. Consequently, the heat recovery path 11 can be reduced in thickness to have a reduced cross-sectional area, and further the thickness of the heat insulating layer can be significantly reduced, thereby attaining significant miniaturization as a whole.

Moreover, flow rates of air can be regulated by the flow rate regulating parts 15 and 16 provided to the flow paths 13 and 14, respectively, so flow rates of branched air can be properly set depending on an operation state such as during rated operation, during partial-load operation, and during standby operation, thereby attaining a favorable high-efficiency operation irrespective of the operation state.

It is to be noted that in all of the preferred embodiments described above, the reformer 8 may be omitted by employing a completely-internal-reforming-type structure.

## Claims

1. A solid electrolyte type fuel cell comprising a heat recovery path (11) that recovers heat loss from a cell module around said cell module including a cell stack (1) that generates electricity from a fuel gas and an oxygen-containing gas, and a burning section that contacts and bums remaining fuel gas and oxygen-containing gas from said cell stack (1), said solid electrolyte type fuel cell comprising:
branch flow rate regulating means (12) that branches supplied fluid to said cell stack (1), said supplied fluid being one of a fuel gas and an oxygen-containing gas, and regulates a flow rate of said supplied fluid to be branched; and
a branch flow path that supplies said supplied fluid having been branched and whose flow rate has been regulated to said heat recovery path (11).

2. The solid electrolyte type fuel cell according to claim 1, wherein said branch flow rate regulating means (12) increases a ratio of said flow rate of said supplied fluid to be branched to the overall flow rate, in response to partial-load operation or standby operation being conducted by said solid electrolyte type fuel cell.

3. The solid electrolyte type fuel cell according to claim 1 or 2, wherein said heat recovery path (11) is formed across a plurality of layers with reference to said cell module (1).

4. The solid electrolyte type fuel cell according to any one of claims 1 to 3, wherein said heat recovery path (11) further surrounds a heat exchanger (10) that exchanges heat with burned waste gas.

5. The solid electrolyte type fuel cell according to any one of claims 1 to 3, wherein said cell module further houses a heat exchanger (10) that exchanges heat with burned waste gas.

6. The solid electrolyte type fuel cell according to any one of claims 1 to 5, wherein said heat recovery path (11) further surrounds a vaporizer (7) that vaporizes said fuel gas added with water.

7. The solid electrolyte type fuel cell according to any one of claims 1 to 5, wherein said cell module further houses a vaporizer (7) that vaporizes said fuel gas added with water.

8. A solid electrolyte type fuel cell comprising a heat recovery path (11) that recovers heat loss from a cell module around said cell module including a cell stack (1) that generates electricity from a fuel gas and an oxygen-containing gas, and a burning section that contacts and bums remaining fuel gas and oxygen-containing gas from said cell stack (1), said solid electrolyte type fuel cell comprising:
a first flow path that leads the oxygen-containing gas to said cell stack (1); and
a second flow path that leads the oxygen-containing gas to said heat recovery path (11).
